# EUROPÄISCHE PATENTANMELDUNG

(11) **EP 1 702 797 A1**
(43) Veröffentlichungstag der Anmeldung: **20.09.2006**
(21) Anmeldenummer: 05405245.1
(22) Anmeldetag: 15.03.2005
(51) Int. Cl.: B60Q 1/26, A42B 3/04

(54) **Bremslicht-System**

(71) Anmelder: Siegro Elektronik Apparatebau GmbH, 8108 Dällikon ZH (CH)
(72) Erfinder: Siegenthaler, Beat, 8105 Watt (CH)
(74) Vertreter: Hammer, Bruno

(57) **Zusammenfassung**

Das Bremslichtsystem für Strassenfahrzeuge, insbesondere für zwei- oder dreirädrige Motorräder, weist mindestens einen Sensor zum Erkennen der Betätigung einer Bremse auf. Der Sensor erkennt den Beginn und das Ende von Bremsvorgängen und erzeugt Bremssignale. Das Bremslichtsystem umfasst weiter ein Bremslicht (28) und eine Schaltvorrichtung (26, 27) zum Betätigen des Bremslichts (28). Der Schaltvorrichtung (26, 27) werden Bremssignale des Sensors oder vom Bremssignal des Sensors abgeleitete Signale zugeführt. Das Bremslicht (28), dem die Bremssignale zugeführt werden ist in einem Gehäuse (111) angeordnet. Am Gehäuse (111) ist eine Befestigungsvorrichtung zum Befestigen des Gehäuses (111) an einem Helm, vorgesehen. Das Gehäuse, kann auch in die Schale eines Schutzhelms (11) integriert sein. Die Bremssignale werden mit Kabel (2122') oder mit einer Sender- Empfängereinrichtung (2122, 26, 27) drahtlos zum Bremslicht (28) im Gehäuse (111) übertragen.

## Beschreibung

Die Erfindung bezieht sich auf ein Bremslichtsystem nach dem Oberbegriff des unabhängigen Patentanspruchs 1, und weiter auf einen Helm mit dem Bremslicht des Bremslichtsystems und ein Motorrad mit dem Bremslichtsystem.

Die Erfindung bezieht sich auf motorisierte Strassenfahrzeuge, welche mit einem Bremslicht ausgerüstet sein müssen und für diesen Fahrer und Mitfahrer eine vom Gesetz vorgeschriebene Helm-Tragpflicht besteht. Motorräder, aber auch Motorräder mit Seitenwagen haben in der Regel ein einziges Bremslicht.

Beim betätigen der Vorderradbremse oder der Hinterradbremse oder beider Bremsen wird auch das hinten angebrachte Bremslicht betätigt, d.h. ein- oder ausgeschaltet, um Lenkern von nachfolgenden Fahrzeugen den Bremsvorgang anzuzeigen. Das Bremslicht leuchtet so lange, wenigstens eine der Bremsen aktiviert ist, d.h. solange wenigstens eine der Bremsen die Fahrt des Motorrads verzögert, bzw. abbremst.
Das Bremslichtsystem nach der Erfindung bringt hier wesentliche Verbesserungen und erhöhte Sicherheit, vor allem für den Motorradfahrer, selbst, aber auch für die übrigen Verkehrsteilnehmer, vor allem für jene Verkehrsteilnehmer, welche dem Motorrad direkt folgen.

Erfindungsgemäss weist das neue Bremslichtsystem die Merkmale des kennzeichnenden Teils des unabhängigen Anspruchs 1 auf. Am Helm nach der Erfindung ist auf der Hinterseite ein Gehäuse mit dem Bremslicht des Bremslichtsystems angebracht oder im Helm integriert. Das Motorrad nach der Erfindung weist ein erfindungsgemässes Bremslichtsystem auf. Die abhängigen Ansprüche beziehen sich auf vorteilhafte Ausführungsformen der Erfindung.

Mit dem zusätzlichern Bremslicht, das am Helm angebracht ist, wird den nachfolgenden Verkehrsteilnehmern angezeigt, dass das vor ihm fahrende Motorrad seine Geschwindigkeit reduziert, indem es bremst. Durch dieses zusätzliche Bremslicht wird das Risiko einer Auffahrkollision stark vermindert und in vielen Fällen auch verhindert.

An einem Motorrad sind in aller Regel die Signalgeber und Sensoren, welche bei Betätigung der Bremsen das Bremslicht einschalten, bereits vorhanden. So ist es möglich, diese Sensoren auch als Signal- und Impulsgeber im Bremslichtsystem nach der Erfindung für das Ein- und Ausschalten des zusätzlichen Bremslichts zu benutzen. Selbstverständlich besteht aber auch die Möglichkeit separate Sensoren einzubauen, die nur eine Funktion im neuen Bremslichtsystem haben. Es ist ferner ebenfalls möglich den Sensor im Bereich des bestehenden Rücklichts des Motorrads anzuordnen. Dies hätte bei einem Motorrad den Vorteil, dass unabhängig davon, ob die Vorderradbremse, die Hinterradbremse oder beide zusammen betätigt werden, mit einem einzigen Sensor der Bremsvorgang erfasst und erkannt wird.

Das vom Sensor- oder von den Sensoren erzeugte Bremssignal wird der Sendeeinrichtung zugeführt, welche das Bremssignal an die Empfangseinrichtung weiterleitet, welche das Bremslicht des Bremslichtsystems betätigt, d.h. es ein- und ausschaltet. Die Übertragung dieses Schaltsignals auf die Empfangseinrichtung kann z.B. drahtlos über Funk, mit Kabel, mit Infrarot oder Ultraschall etc. erfolgen.

Das zusätzliche Bremslicht ist in einem Gehäuse am Helm des Fahrers angeordnet, nach hinten ausgerichtet und deckt einen grösseren Sichtwinkel ab, sodass der Warn - Effekt auch dann gewährleistet ist, wenn der Fahrer seinen Kopf nicht exakt geradeaus nach vorne gerichtet hält. Das Aufleuchten dieses zusätzlichen Bremssignals erfolgt gleichzeitig und gleich mit dem Aufleuchten der am Fahrzeug montierten, zur gesetzlich vorgeschriebenen Ausrüstung des Motorrads gehörenden Bremsleuchte. Und genauso erlischt das Bremslicht, sobald nicht mehr gebremst wird.

Ist das Motorrad mit zwei Personen besetzt, die hintereinander sitzen, kann das Gehäuse mit dem Bremslicht am Helm des hinten sitzenden Mitfahrers angebracht werden. Bei einem Bremslichtsystem mit zwei Gehäusen mit Bremslicht, die an den Helmen des Fahrers und des Mitfahrers angebracht sind, kann z.B. mit einem Schalter der Empfänger und/oder das Bremslicht im Gehäuse am oder im Helm des Fahrers ausgeschaltet werden.

Dieses neue optische Warnlicht ist also an der hinteren Seite des für den Verkehrsteilnehmer von Gesetz vorgeschriebenen Helms positioniert, entweder integriert oder von aussen zuverlässig befestigt. Das Warnlicht ist blendfrei konstruiert und kann je nach dem Willen des Fahrers aus- oder eingeschaltet werden. Beim eingeschalteten System funktioniert es aber immer und nur in Verbindung mit der bestehenden Bremsanlage.

Der vorliegenden Erfindung liegt die Idee zugrunde, dass mit relativ einfachen und auch kostengünstigen Mitteln die Verkehrssicherheit eines grossen Teils der am heutigen Strassenverkehr teilnehmenden Personen erheblich erhöht werden kann, was wiederum zur Reduzierung von grösseren Personen- und Sachschäden führt.

Die Erfindung wird nachstehend an Hand der schematischen Zeichnungen, welche Ausführungsformen der Erfindung und Teile davon zeigen näher erläutert.

Es zeigen:
- Fig. 1: ein Motorrad, das mit dem Bremslichtsystem ausgerüstet ist und mit einem Helm auf welchem das Gehäuse mit dem Bremslicht angebracht ist;
- Fig. 2: das vereinfachte Blockschema eines Bremslichtsystems nach der Erfindung, bei welchem die Betätigung der Vorderradbremse und der Hinterradbremse mit Sensoren an den Bremszylindern erfasst wird;
- Fig. 3: das vereinfachte Blockschema eines Bremslichtsystems nach der Erfindung, das in einem Motorrad weitgehend unabhängig vom Bremslichtsystem der Grundausrüstung des Motorrads arbeitet.

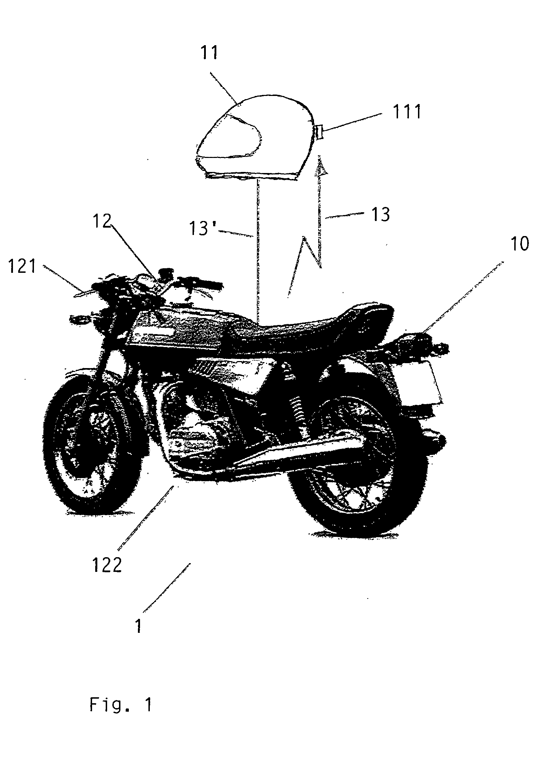

Bei dem in Fig. 1 gezeigten Motorrad 1 mit Helm 11 für den Fahrer oder für den Mitfahrer, wird das Betätigen der Vorderradbremse mit dem Bremshebel 121 links am Lenker 12 mit einem Sensor (nicht gezeigt) überwacht und erkannt.
Die Hinterradbremse wird mit dem Bremshebel 122, der bei der Fussraste für den rechten Fuss angeordnet ist mit dem Fuss betätigt. Auch die Betätigung der Fussbremse wird mit einem Sensor (nicht gezeigt) überwacht und erkannt. Die Sensoren sind mit einem Sender (nicht gezeigt) verbunden. Über die Verbindungen von den Sensoren zum Sender werden die Bremssignale der Sensoren dem Sender zugeführt. Als Verbindung von den Sensoren zum Sender können die gleichen Kabel benutzt werden, welche zum Bremslicht der Grundausstattung des Motorrads führen. Die Bremssignale der Sensoren können aber auch über separate Leitungen zum Sender geführt werden.

Der Sender kann mit Strom aus der Batterie des Motorrads betrieben werden oder es kann für den Betrieb des Senders eine separate Stromversorgung, z.B. eine zusätzliche Batterie vorgesehen sein. In einer anderen Ausführungsform könnten statt separaten Sensoren an den Bremshebeln, die Sensoren des fest montierte Bremslicht der Grundausrüstung des Motorrads benutzt werden.

Die Signale der Sensoren werden zum Sender (nicht gezeigt) geleitet. Der Sender kann beispielsweise im Gehäuse 10 des fest am Motorrad 1 montierten und häufig mit dem Bremslicht kombinierten Rücklichts eingebaut sein.

Am Helm 11, des Fahrers oder des Mitfahrers ist das Gehäuse 111, in welchem ein Empfänger (nicht gezeigt) für die Signale des Senders, und das Bremslicht des angeordnet ist. Empfänger und Bremslicht werden beispielsweise von Batterien oder Akkumulatoren mit Strom versorgt, welche ebenfalls im Gehäuse 111 angeordnet sind.

Sobald eine oder beide Bremsen des Motorrads betätigt werden, sendet der Sender ein Signal zum Empfänger im Gehäuse 111. Der Empfänger schaltet das Bremslicht ein und dieses bleibt so lange eingeschaltet, wie eine der Bremsen betätigt wird. Die Übertragung der Bremssignale zu dem im Gehäuse 111 angeordneten Empfänger erfolgt drahtlos mit Funk, was mit dem Blitzpfeil 13 veranschaulicht ist. Die Bremssignale können auch mit Kabel zum Bremslicht im Gehäuse 111, das am Helm 11 hinten angebracht ist übertragen werden, was mit der Geraden 13' vom Motorrad 1 zum Helm 11 veranschaulicht ist.

Im gezeigten Beispiel werden die Bremssignale zum Betätigen des Bremslichts drahtlos mit Sender und Empfänger zum Schalter des Bremslichts übertragen. Die Übertragung dieser Signale könnte auch über ein z.B. steckbares Kabel von einem Stecker (nicht gezeigt) am Motorrad 1 zum Bremslicht im Gehäuse 111 am Helm 11 übertragen werden. Im gleichen Kabel könnten auch Leiter für den Strom für das Bremslicht geführt sein. In diesem Fall würde das Bremslichtsystem werde Sender noch Empfänger benötigen.

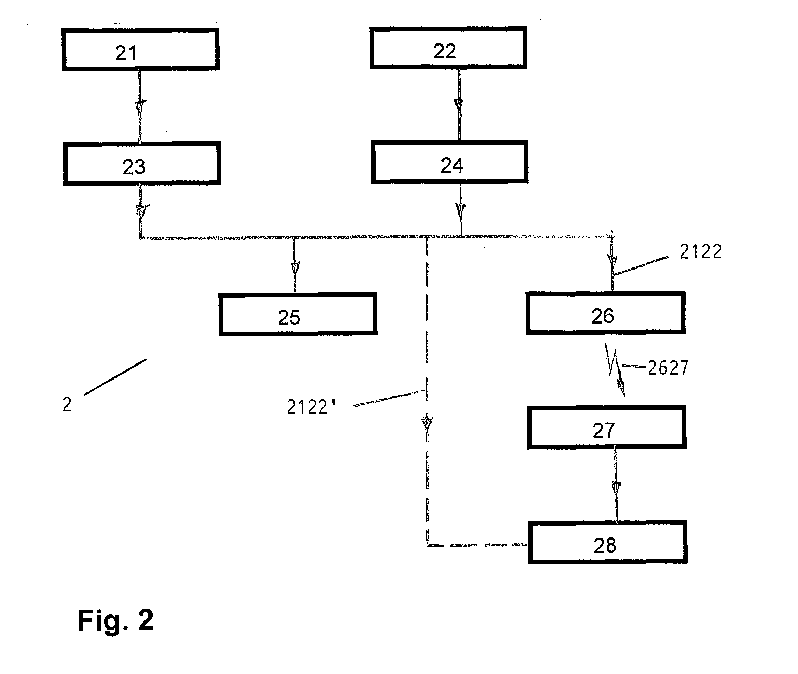

Fig. 2 zeigt stark vereinfacht das Blockdiagramm 2 für die Bremslichtanlage eines Motorrads, die mit einem neuen Bremslichtsystem nach der Erfindung erweitert ist. Der Handbremshebel 21 mit welcher die Vorderradbremse betätigt wird und der Fussbremshebel 22 für die Hinterradbremse wirken auf Bremszylinder 23, 24 welche die Bremsbacken oder Bremszangen betätigen. Wenn beide oder einer der Bremshebel 21, 22, betätigt wird, leuchtet das Bremslicht 25.

Die Bremssignale vom Handbremshebel 21 und vom Fussbremshebel 22 werden über die Leitung 2122 dem Sender 26 zugeführt. Der Sender 26 übermittelt die Bremssignale drahtlos an den Empfänger 27, der über Schalter (nicht gezeigt) das Bremslicht 28 ein- und ausschaltet. Empfänger 27 und Rücklicht 28 sind zusammen mit der Stromquelle wie Akku oder Batterie im Gehäuse 29 angeordnet. Das Gehäuse 29 wird, das Rücklicht nach hinten gerichtet, am Helm des Motorradfahrers befestigt.

Sehr einfach ist in jedem Fall die Ableitung der Bremssignale für das Bremslicht des Bremslichtsystems von der Leitung, welche zum Bremslicht der Grundausrüstung des Motorrads führt, wie dies in Fig. 2 gezeigt ist.

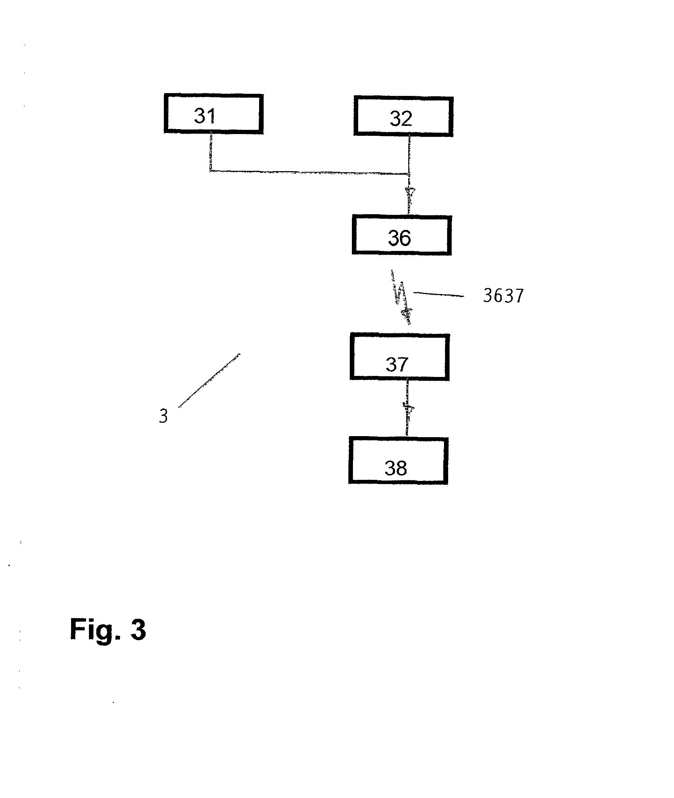

Bei dem im Blockdiagramm 3 von Fig. 3 stark vereinfacht dargestellte Bremslichtsystem nach der Erfindung, werden die Bremsvorgänge beispielsweise am Bremshebel 31 für die Vorderradbremse und am Fussbremshebel 32 für die Hinterradbremse mit je einem oder mehreren Sensoren (nicht gesondert gezeigt) erfasst. Bremssignale werden zum Sender 36 geleitet und von diesem beispielsweise mit Funk, veranschaulicht mit dem Blitzpfeil 3637, zum Empfänger 37 übertragen. Der Empfänger 37 betätigt das Bremslicht 38 solange wenigstens ein Sensor das Betätigen einer Bremse feststelle. Der Empfänger 37 und Bremslicht 38 sind in einem Gehäuse, das sich hinten einem Helm des Motorradfahrers befindet angeordnet. Das Bremslicht nach der Erfindung wird auch als Helmlicht oder Helmbremslicht bezeichnet.

Das Bremslichtsystem für Strassenfahrzeuge, insbesondere für zwei- oder dreirädrige Motorräder, weist mindestens einen Sensor zum Erkennen der Betätigung einer Bremse auf. Der Sensor erkennt den Beginn und das Ende von Bremsvorgängen und erzeugt Bremssignale. Das Bremslichtsystem umfasst weiter ein Bremslicht 28 und eine Schaltvorrichtung 26, 27 zum Betätigen des Bremslichts 28. Der Schaltvorrichtung 26, 27 werden Bremssignale des Sensors oder vom Bremssignal des Sensors abgeleitete Signale zugeführt. Das Bremslicht 28, dem die Bremssignale zugeführt werden ist in einem Gehäuse 111 angeordnet. Am Gehäuse 111 ist eine Befestigungsvorrichtung zum Befestigen des Gehäuses 111 an einem Helm, vorgesehen. Das Gehäuse, kann auch in die Schale eines Schutzhelms 11 integriert sein. Die Bremssignale werden mit Kabel 2122' oder mit einer Sender-Empfängereinrichtung 2122, 26, 27 drahtlos zum Bremslicht 28 im Gehäuse 111 übertragen.

## Patentansprüche

1. Bremslichtsystem für Strassenfahrzeuge, insbesondere für zwei- oder dreirädrige Motorräder (1), mit mindestens einem Sensor, für das Erkennen der Betätigung einer Bremse, wobei der mindestens eine Sensor den Beginn und das Ende von Bremsvorgängen erkennt und Bremssignale erzeugt, und mit einem Bremslicht (25) und einer Schaltvorrichtung zum Betätigen des Bremslichts (25), welcher Bremssignale des Sensors oder vom Bremssignal des Sensors abgeleitete Signale zugeführt werden,
**gekennzeichnet durch**
ein Gehäuse (111) und ein weiteres in einem Gehäuse (111) angeordnetes Bremslicht (28), welchem die Bremssignale zugeführt werden
sowie **durch** eine Befestigungsvorrichtung zum Befestigen des Gehäuses an einem Helm (11),
oder
**durch** ein Gehäuse (111), das in die Schale eines Helms (11) integriert ist

2. Bremslichtsystem nach Anspruch 1, mit einer Kabelverbindung (2122') oder mit einer Einrichtung (26, 27) zum drahtlosen Übertragen der Bremssignale zum Bremslicht (28) im Gehäuse (111) .

3. Bremslichtsystem nach Patentanspruch 2, mit einer Sendeeinrichtung (26), der die Bremssignale zugeführt werden und die Sendeeinrichtung (26) den zugeführten Bremssignalen entsprechende Bremssignale aussendet,
sowie mit einer Empfangseinrichtung (27) für den Empfang der von der Sendeeinrichtung (26) gesendeten Bremssignale, welche Empfangseinrichtung (27) im Gehäuse (111) angeordnet ist und
und mit einer im Gehäuse (111) angeordneten Schaltvorrichtung zum Betätigen, d.h. zum Einschalten und Ausschalten des weiteren Bremslichts (28), entsprechend den von der Empfangseinrichtung (27) empfangenen Bremssignalen.

4. Bremslichtsystem nach Anspruch 2 oder 3, bei welchem die Sendeeinrichtung (26) und die Empfangseinrichtung (27) mit Funk, oder mit Ultraschall oder mit Infrarot arbeiten und die Bremssignale als Funksignale, Ultraschallsignale oder als Infrarotsignale von der Sendeeinrichtung (26) zur Empfangseinrichtung (27) übermittelt werden.

5. Bremslichtsystem nach einem der Ansprüche 1 bis 4, mit einem Helm (11), an welchem das Gehäuse (111) hinten am Helm angebracht ist oder
mit zwei Gehäusen (111), von denen je eines hinten an einem Helm (11) angebracht ist.

6. Bremslichtsystem nach einem der Ansprüche 1 bis 5, bei welchem das Bremslicht (18) im Gehäuse (111) in der Horizontalen und in der Vertikalen Licht über einen Winkel von bis zu 180° strahlt.

7. Bremslichtsystem nach einem der Ansprüche 1 bis 6, bei welchem das Bremslicht (28) das Licht halbkugelförmig ausstrahlt.

8. Bremslichtsystem nach einem der Ansprüche 1 bis 7, bei welchem das Gehäuse (111) zusätzlich zum Bremslicht (28) ein Rücklicht aufweist.

9. Helm (11), mit einem Gehäuse (111) des Bremslichtsystems nach einem der Ansprüche 1 bis 8, wobei das Gehäuse (111) am Helm (11) auf der hinteren Aussenfläche angebracht ist.

10. Helm (11) bei welchem das Gehäuse (111) des Bremslichtsystems nach einem der Ansprüche 1 bis 8, hinten in die Struktur des Helms (11) integriert ist.

11. Zwei- oder dreirädriges Motorrad mit einem Bremslichtsystem nach einem der Ansprüche 1 bis 8, bei welchem das Gehäuse mit dem Bremslicht eine Vorrichtung zum Befestigen des Gehäuses am Helm (11) des Motorradfahrers aufweist oder mit einem Helm (11) in welchem das Gehäuse (111) mit dem Bremslicht (28) integriert ist.
